# EUROPEAN PATENT APPLICATION

(11) **EP 1 375 093 A1**
(43) Date of publication of application: **02.01.2004**
(21) Application number: 03253475.2
(22) Date of filing: 03.06.2003
(51) Int. Cl.: B26D 7/18, B26F 1/40, B26F 1/44, B29C 45/14

(54) **Label cutter and presentation machine**

(30) Priority: 18.06.2002 GB 0213952
(71) Applicant: Archer, Anthony William, Burntwood, Staffordshire WS7 8FJ (GB)
(72) Inventor: Archer, Anthony William, Burntwood, Staffordshire WS7 8FJ (GB)
(74) Representative: Parnham, Kevin

(57) **Abstract**

A label cutter and a label cutting machine 13 which feeds film 101 from a pre-printed roll of film, to a cutter, which has moving blades 6 that can be selected, allowing the choice of which labels are to be cut when cutting a multiple of labels in a single operation. A transfer head 11 is a part of the cutter and is movable between a cutter cassette 100 and a presentation position. The waste cut film is automatically wound up for disposal.

## Description

The present invention relates to label cutting and a label presentation machine, which can be attached to an in mould labelling system that presently uses pre-cut printed labels fed from a label canister. The machine replaces the label canister.

There is a process in the plastics industry called in mould labelling, this involves a robotic system that picks a printed label from a stack of labels stored in a canister, then puts the label inside a moulding tool.

The problem with picking printed labels from a stack is the labels tend to stick together, causing labels to be dropped, or misplaced in a moulding tool. This renders the moulded product at least unsightly.

There are systems on the market, which cut a label out from a roll of printed film. These systems have fixed blades, the film is cut by a pressure plate pressing the printed film against the blades. When cutting a multiple of labels, if some of the labels do not need to be cut, the cutting tool would need to be modified. Furthermore, such fixed blades upon which the film is pressed can tear the labels with resultant ragged edges and there can be misalignment with the printed label shape.

Even when cut from a film it will be understood that it is necessary to transport those labels to an appropriate moulding machine. Thus, as illustrated in International Patent Application No. PCT/GB95/01810, all of the labels are cut from a film by a die-press arrangement, a transfer table will enter the space between the press and die in order to remove the labels. Such an approach is thus inconvenient and complicated.

According to the present invention there is provided a label cutter comprising two opposed plates respectively in a blade cassette and a transfer head, the blade cassette including a blade aperture for accommodating a blade whilst at least the transfer head includes a blade recess such that in use, the opposed plates are brought together into an abutment with a label film between them, the blade extends between the blade aperture and the blade recess in order to cut a label from the film and that label remains associated with the transfer head after cutting.

Typically, the plates are flat or curved.

Possibly, there are more than one blade aperture and blade recess combinations within the cutter. Furthermore, these combinations may be selectively operatable dependent upon presented label size in the label film.

Normally, the head includes means to cause transient adherence to the transfer head by a label. Typically, the transient adherence is due to suction.

Generally, the head is displaceable to present a label to a moulding apparatus or pick-up means for such apparatus.

Normally, the blade has a reciprocal action across the blade aperture and blade recess. Possibly, the blade is driven by a linear actuator. When cutting a multiple of labels in a single operation, each cutting blade has its own linear actuator and separate control, if some of the labels do not need to be cut, the cutting blades not required can be turned off. In this way any blade combination can be achieved without modification. Normally, at least one of the plates has a non-slip surface.

Also in accordance with the present invention there is provided a label cutting machine comprising a label cutter as described above and a supply reel for presentation of the film across the cutter and a waste reel for collection of excess film from which labels have been removed.

The machine cuts the label or labels by pulling a pre-printed film, which is stored on the reel, over the cutter cassette, the film is pulled through by drive rollers which pull off sufficient film for each operation. When sufficient film has been drawn off, the transfer head is moved by a linear actuator towards the cutter cassette, the printed film is then sandwiched between the transfer head and a non slip plate on the cutter cassette, at this point a vacuum is applied to the transfer head in the area where the label or labels are to be, the cutting blade or blades are now driven through the blade aperture, in the plate on the cutter cassette, through the printed film and into the blade recess in the transfer head. When the label or labels have been cut, the transfer head actuator is then retracted retaining the cut label or labels, the transfer head can now be moved, either by a linear actuator, or a rotary actuator, to a presentation position for the label or labels to be collected up by an in mould label robot. When the film is drawn off for the next operation, the waste film left from the cut is wound onto the waste reel ready for disposal. The machine would replace the label canister on an existing or new in mould labelling system, only presenting the label or labels needed for each operation.

An embodiment of the invention will now be described by the way of example with reference to the accompanying drawings in which

Fig. 1 is a drawing of the internal parts of the cutter cassette.

Fig. 2 is a drawing of the internal parts of the transfer head with linear actuator.

Fig. 3 is a drawing of the internal parts of the cutter cassette and transfer head during a cut.

Fig. 4 is a drawing of the cutter cassette attached to the flat bed of the machine.

Fig. 5 is a drawing of a system with the transfer head on a linear beam actuator over the cutter cassette.

Fig. 6 is a drawing of a system with the transfer head on a rotary actuator over the cutter cassette.

Fig. 7 is a drawing of the internal parts of the cutter cassette and transfer head after a cut.

Fig. 8 is a drawing of a system with the transfer head on a linear beam actuator at a presentation point.

Fig. 9 is a drawing of a system with the transfer head on a rotary actuator at the presentation point.

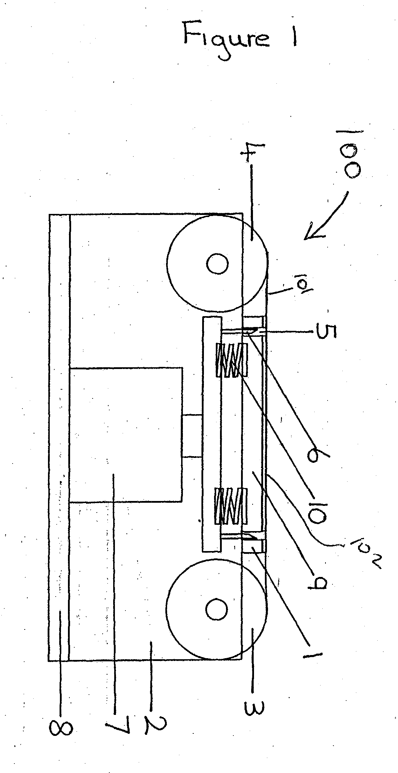

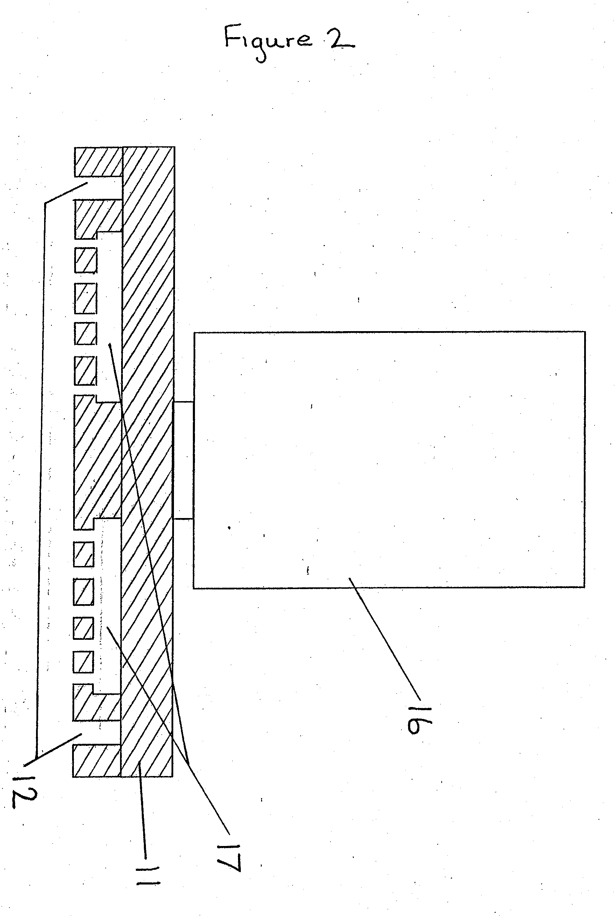

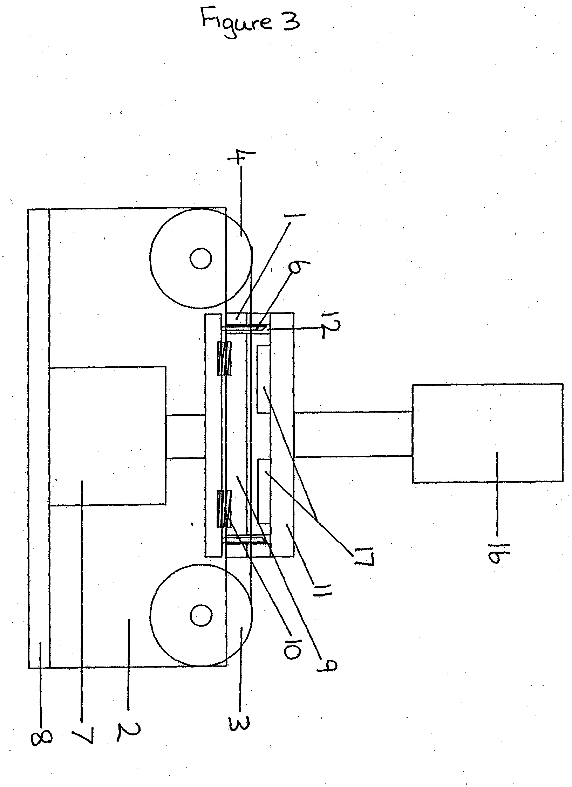

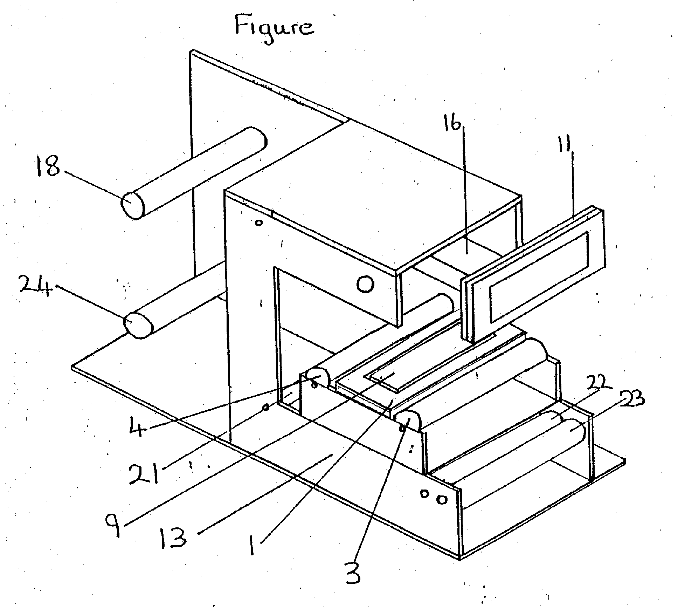

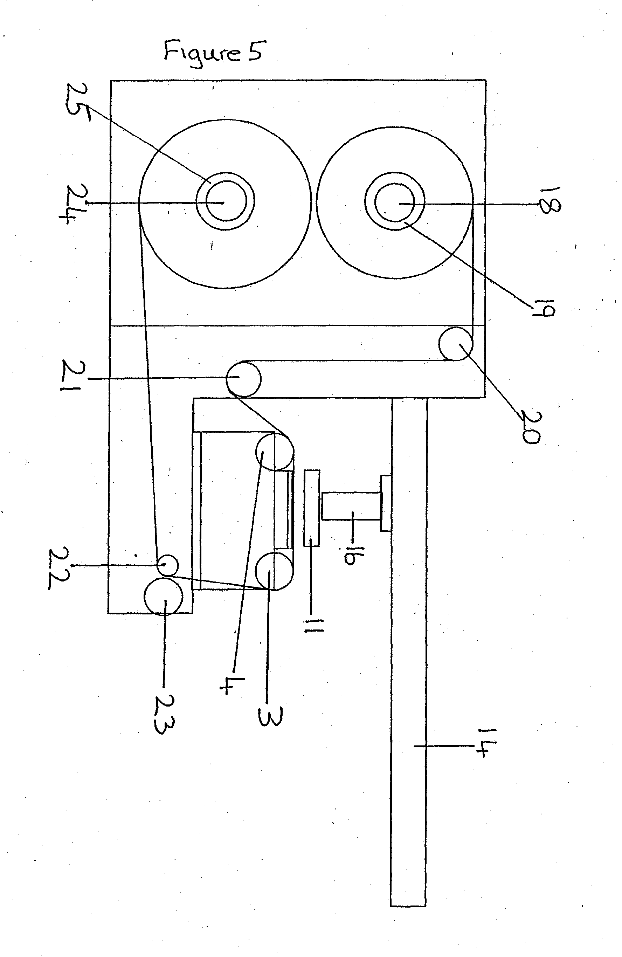

Referring to Fig. 1 showing an internal view of a cutter cassette 100. The cutter cassette 100 is a self contained unit designed within a blade aperture 5 to the required label shape. There is a base non slip plate 1, which is mounted across the top of a frame 2 with steel drive rollers 3, 4, before and after the plate 1. The plate 1 and rollers 3, 4 are to keep a plastic film 101 flat and smooth. The rollers 3, 4 are set to give a clearance space between the film 101 and the non slip plate 1. The rollers 3, 4 have electrical earth cables, to ground any static electrical charge in the film caused by motion. As indicated, the non slip plate 1 has a blade aperture 5 which has a shape the same shape as the label is to be cut. A cutting blade 6 is mounted on a linear actuator 7 to reciprocate within the aperture 5 to alternately extend beyond and retreat into that aperture 5. The actuator 7 is fixed to the base of the frame 8. When the actuator 7 is in the retracted state, the blade 6 of the cutter is set to be just below the top edge of the label shaped blade aperture 5 of the non slip plate 1, mounted across the top of the frame 2.

A central part of the cassette 100 and defined by the aperture 5 provides label non slip plate 9 mounted on springs 10. This label plate 9 is set to a height so when the actuator 7 is in the retracted state, the non slip plate 9 inside the bladed area, is flush to the non slip plate 1 mounted across the top of the frame 2. Thus, the plates 1, 9 form a substantially consistent support for the film 101 in order to allow appropriate presentation of the film 101 whereby labels can be cut by the blade 6.

Fig. 3 shows the internal parts of the cutter cassette and transfer head during a cut. When the actuator 7 is in its extended state the springs 10 under the non slip plate 9 are compressed keeping pressure holding the label or labels in place against the transfer head 11. The blade 6 travels through the film 101 and into a slot blade recess 12 cut into the transfer head 11. As the actuator 7 is retracted the springs 10 extend to retain a bias in order to keep pressure on the now cut label, above the label plate 9 against the head 11 described later.

If a number of labels are to be cut out in a single operation each cutting blade will have its own powered actuator, with its own control, in the event that one out of a multiple of labels, should not need to be cut, that individual actuator can then be turned off so that only the labels needed are cut. With this cutting system any combination can be selected with out the need for modification to the cutting blades themselves.

A number of blade aperture and blade recess combinations with respective cutting blades could be provided within the associated cassette and transfer head. In such circumstances, within the individual blade actuators for each combination and means as described later for determining label/film type it will be understood that appropriate labels may be cut by a blade or blades within the correct recess/aperture combination for that label. The cut labels still remaining associated with the transfer head for appropriate presentation to moulding apparatus/ mechanisms. Alternatively, as the cutter cassettes are relatively easily installed along with the transfer head, then a number of cassettes and transfer heads may be provided for different label shapes. Pairs of cassettes and heads with appropriate matched blade aperture and blade recess slots will be therefore provided. To facilitate alignment and/or such matching, locating dowels or lugs may be provided at the corners of the respective cassette and transfer head such that these dowels or lugs enter a location aperture in the opposing respective cassette or transfer head to urge alignment and also matching between these components.

Fig. 4 shows the cutter cassette mounted onto a flat bed of the machine 13, the cutter cassette has to be interchangeable with other cutter cassettes for different label shapes.

The transfer head 11 must be moved between association with the cutter cassette and a label presentation point. Thus, it can be moved in a linear direction, on a linear actuating beam 14 as shown in Fig. 5. Alternatively, the transfer head may be rotated through 90° with a rotary actuator 15 as shown in Fig. 6.

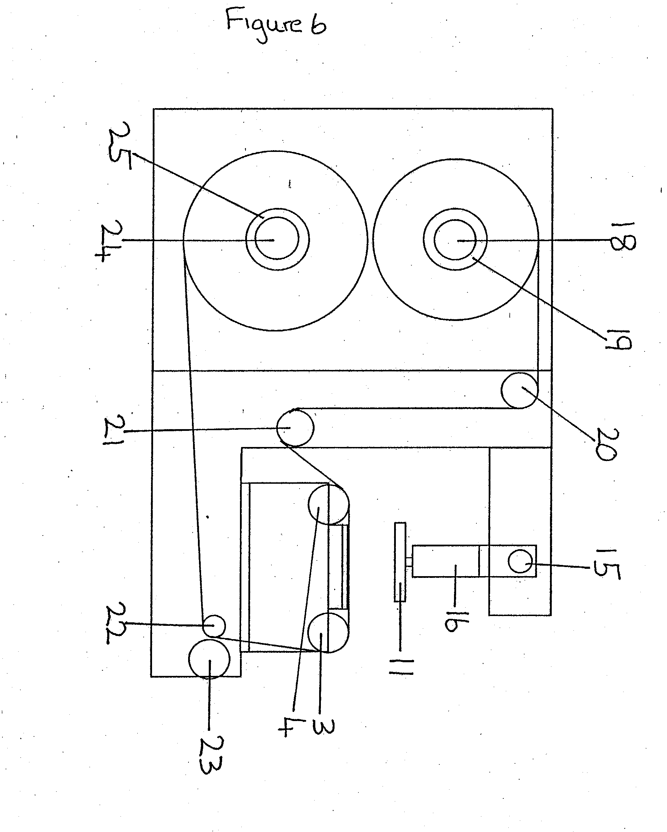

Fig. 2 shows the transfer head 11 mounted on a linear actuator 16. The transfer head 11 has a blade recess slot 12 cut into it, the same shape as the label or labels are to be, the slot 12 is slightly larger than the thickness of the cutting blade 6, so when the blade 6 is inserted inside the slot 12 there is a slight clearance either side of the blade 6. An area of the head 11 where the cut label or labels are after cutting has holes drilled through to a chamber 17. Thus, when a vacuum is applied to the chamber 17, the labels are held by suction. Prior to cutting the whole section of the film is held by the abutment clamping between the cassette and the transfer head as well as possibly this suction adhesion through the holes.

Fig. 3 shows when the head 11 is opposite the cutter cassette 100, the head actuator 16 is extended, the transfer head 11 presses firmly against the plastic film and onto the non slip plate 1 on top of the cutter cassette 100. This action sandwiches or clamps the plastic film preventing any movement. The plates of the cassette 100 and head 11 are forced into abutment to resiliently hold the film 101 so that when cut by the blade there is better label definition.

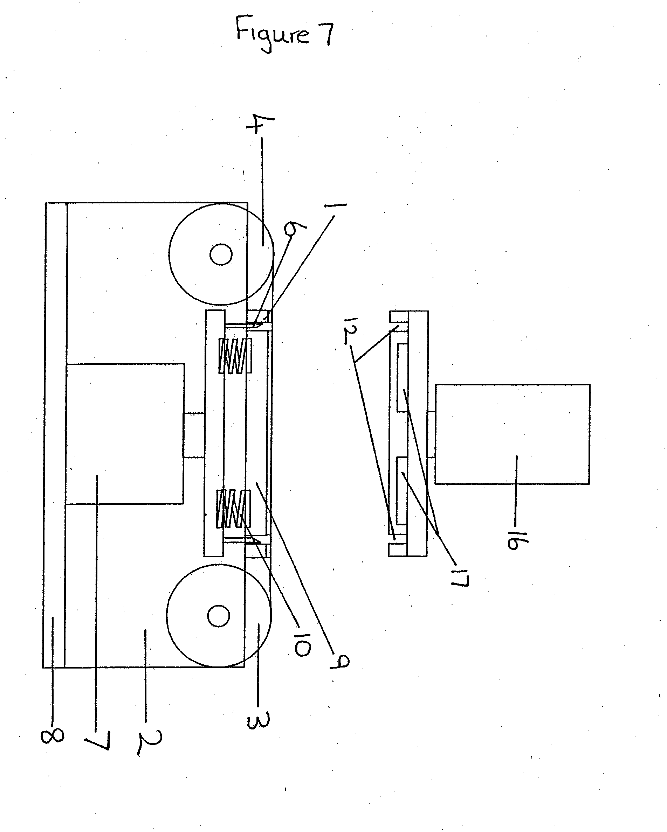

Fig. 7 shows when the label has been cut the actuator 16 on the transfer head 11 is retracted, the transfer head will move away from the cutter cassette, holding the cut label in place normally by suction through the holes.

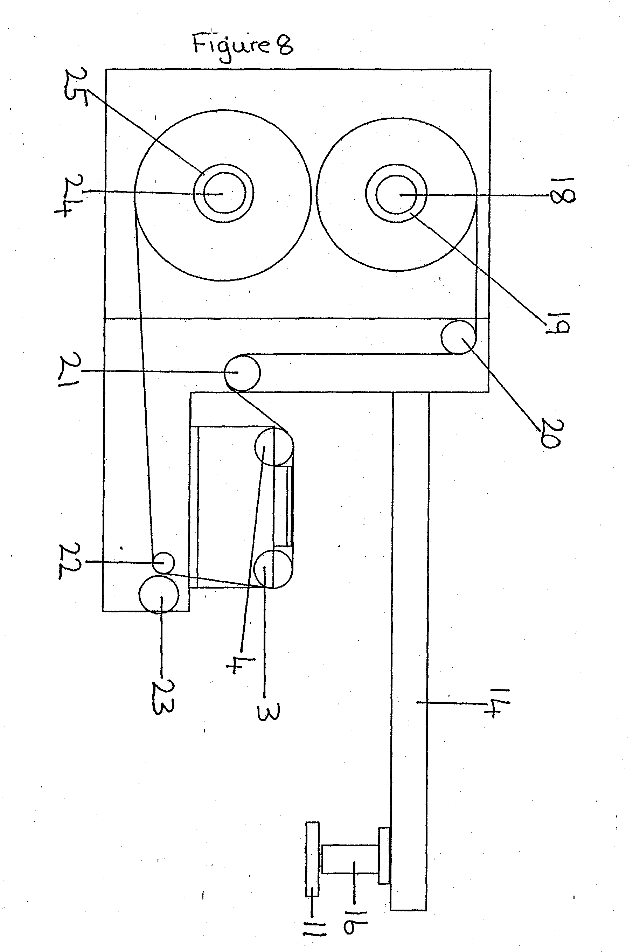

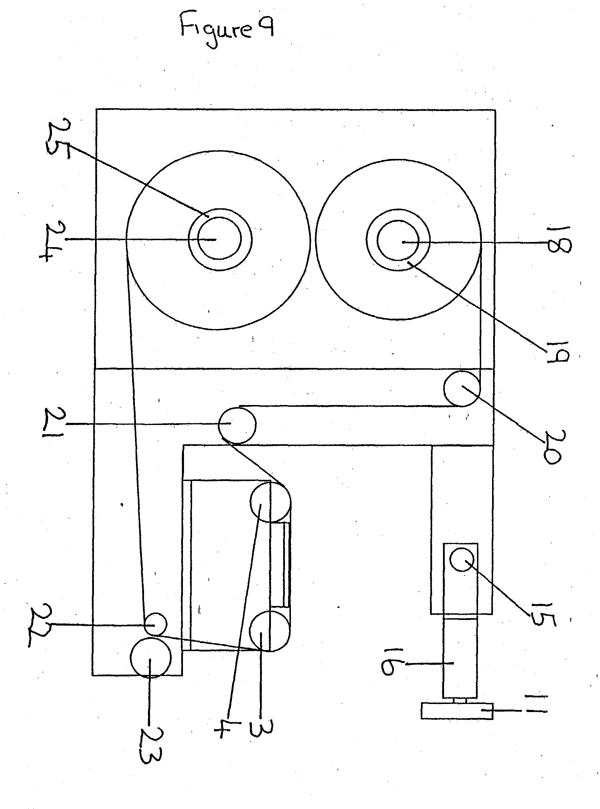

Fig. 8 shows the transfer head 11 can be moved in a linear direction, on a linear beam actuator 14 to a position where the label can be presented. Alternatively, as illustrated in Fig. 9 the transfer head 11 is rotated through 90° on a rotational actuator 15, to a position where the label can be presented. When at these presentation positions the transfer head actuator 16 is again extended, presenting the cut label or labels to an in mould labelling robot, or directly into a moulding tool. The transfer head 11 is interchangeable with other transfer heads for different label shapes and sizes.

As indicated above, the present label cutter is associated with a machine for delivery of labels to an in-mould labelling arrangement for such items as food containers. Generally, it is convenient to provide labels in the form of a film 101 upon which the described labels have previously been printed. In such circumstances, labels are only cut when required and there is less possibility of multi-label pickup from a stack or label distortion or misaligned cut offset.

Normally, the film will comprise a band of plastic material on which labels are printed either individually but more usually in multiple side-by-side patterns with spacing between rows of labels on the film. A roll of film will be presented to the label cutter and through appropriate control mechanisms accurate cutting of labels from that film achieved. These control mechanisms may include simple exact feed of the film between each cutting cycle such that the label cutter is initially calibrated for appropriate cutting of labels from the film and then upon each subsequent cycle the film advanced a predetermined and accurately controlled distance such that the next cutting cycle is controlled whereby the blade consistently cuts a label or labels from the film. As indicated above, generally the transfer head retains that label after cutting for appropriate distribution to in mould labelling apparatus.

A closed loop control mechanism could incorporate use of a sensor associated with the label cutter to determine printed label position in the film band. This sensor may be a device to read a reference flag or mark also printed on the film or the label itself whereby the film will only be advanced until appropriate position for subsequent clamping by the plates of the transfer head and cutter cassette and then subsequent cutting of the label by the blade as described previously. In such circumstances, by use of closed loop control of the label cutter, variations in film tension, inaccuracies with regard to film displacement between cutting cycles and other factors may be corrected in comparison with previous simple dead reckoning film feed advance techniques for ensuring accurate multiple label cut positioning.

In short, a label cutting machine 13 in accordance with the present invention will comprise a label cutter as described above as well as means for delivery of a film 101 incorporating the labels printed or otherwise formed in that film 101. Normally, this mechanism for delivery of the film 101 will comprise a reel to reel arrangement in which a reel or roll 101 of film is presented to the cutter using an appropriate drive mechanism and once the labels have been cut from that film, a further waste reel used to collect the remaining film for convenient disposal. The film 101 may be driven by specific drive rollers 22, 23 and/or through rotation of the respective reel to reel relationship in order to present the printed labels appropriately across the plates of the transfer head 11 and cutter cassette 100 with the blade aperture 5 and blade recess 12 positioned whereby the blade 6 crosses from the aperture 5 and to the recess 12 in order to cut the film 101 and therefore provide a cut label which remains associated with the transfer head 11. The transfer head 11 then presents the label to appropriate means for delivery to in moulding labelling apparatus for such items as food containers. Typically, the transfer head 11 will either rotate through 90° degrees to allow access for a robotic pick-up device to remove labels from the transfer head 11 for delivery to the in mould labelling apparatus. Alternatively, the transfer head 11 may move axially to allow access to the plate of the transfer head 11 for similar removal of the cut labels.

Fig. 5 and Fig. 6 shows a reel or roll feed system for a label cutting machine. A roll of plastic film 101 is put onto a shaft 18 and held in place at both sides by non slip collars 19. The collars 19 stop the roll of plastic film 101 itself turning on the shaft 18. The film 101 is threaded over guide rollers 20, 21 through the machine and then over the rollers 3, 4 of the cutter cassette 100. The film 101 is put between drive rollers 22 & 23 at the end of the machine 13. When the drive rollers 22 & 23 rotate the film 101 is pulled. As the roll of film 101 can not rotate on the shaft 18 due to the non slip collars 19, the shaft 18 itself rotates, in a controlled manner but offering a resistance to rotational movement.

A second shaft 24 also with non slip collars 25 is provided to wind up the scrap or waste film left from the cutting process after removal of the labels.

The machine 13 is controlled by a programmable logic controller (PLC), which is programmed to operate the machine 13 automatically in cycle with an in mould labelling robot pick-up for cut labels from the transfer head 11.

This machine 13 can be used with existing or new in mould forming machines that use pre-cut labels stored in a label canister. The machine 13 replaces the label canister but only cuts and presents the labels as required for each in mould forming operation.

As indicated above, a label cutter in accordance with the present invention comprises opposed plates within a respective cutter cassette 100 and transfer head 11 whereby a blade 6 extends across from a blade aperture 5 in the cutter cassette 100 to a blade recess slot 12 in the transfer head 11 in order to appropriately cut a label from a film 101. Normally, this film 101 is presented on a reel to reel supply mechanism. The blade 6 is normally retracted within the blade aperture 5 when not in use for safety reasons. The transfer head 11 and cutter cassette 100 are brought into close abutment with the film 101 sandwiched between. Thus, it will be understood that the film 101 is resiliently held for appropriate precise cutting with little distortion of the film 101 and therefore accurate cutting of the label. By such an approach, it will be appreciated that control mechanisms for accurately feeding the film 101 and therefore cutting labels are more appropriate with the present label cutter than previous systems where the film was simply pressed against a fixed cutting die with potential for distortion in the film 101 in that cutting process.

The transfer head 11 and cutter cassette 100 are generally matched. Thus, the blade aperture 5 and its blade 6 in the cutter cassette 100 are matched by a reciprocal blade recess 12 in the transfer head 11 to accommodate the blade 6 as it cuts a label by penetrating across the gap between the aperture 5 and the recess 12 in operation. Once clamped, the only unrestrained part of the film 101 within the cutter is therefore in this space between the blade aperture 5 and blade recess 12 such that significant distortion is not possible. Typically, the blade 6 has a serrated knife edge.

Normally, a label cutter in accordance with the present invention will be arranged to cut several labels in one operation. Thus, the respective cutter cassette 100 and transfer head 11 will include several blade aperture 5/blade recess 12 combinations for respective labels. Associated delivery and supply mechanisms for the film 101 may also allow manipulation of that film 101 to position printed or formed labels appropriately above the correct aperture/recess combination. As indicated previously, the machine may incorporate logic control mechanisms to allow such accurate positioning of the film 101 for appropriate label cutting.

A label cutter in accordance with the present invention may cut any shape of label required including round, square, oval and donut ring labels. With donut labels, a central segment of the label is removed by its own blade aperture/blade recess combination. In such circumstances, this central segment may be retained through a suction mechanism upon the cutter cassette and subsequently disposed of by appropriate means whilst the label is presented and removed from the transfer head as described above.

Generally, each blade within its blade aperture will have its own displacement mechanism. This mechanism may be an actuator as described above or other technique. In any event, with each blade or blade segment individually addressable and operatable, it will be understood that respective cutter cassettes and transfer heads can be arranged to accommodate a range of different label sizes, shapes and dimensions. Also as a matched pair, the cutter cassette and transfer head may be such that they are readily installed and removed from the machine such that different cassettes/transfer head combinations may be installed as required for particular labels.

Normally, the transfer head will include specific aperture recesses matched with the blade and blade aperture in the cutter cassette. Alternatively, the transfer head may be rendered universal for a wide range of different cutter cassettes by accommodating blade recesses for a number of different blade apertures/blades or the transfer head may incorporate a pliable material to allow resilient clamping of the film but penetration of the blade into the resilient layer on the transfer head when a label is cut. Nevertheless, it is essential as described above that the film is secured in a flat clamped relationship in accordance with the present invention to allow the blade to move vertically upon the film for good cut label definition.

Previously, films from which labels have been cut have generally had a thickness in the order of 60 to 80 microns. The material from which the film is made is generally a biaxially orientated polypropylene or polystyrene material. Due to the present clamping of the film between the plates of the transfer head and the cutter cassette, films with a thickness of only 20 microns can be used as there are less distortion and/or label stacking pick-up problems. In such circumstances, there is a significant reduction in individual label weight and therefore material cost benefits with regard to using the present label cutter.

As described above generally, a blade will be used in order to cut the labels. However, the blade may be heated for easier and less distorted penetration of the film to cut the label. Furthermore, a heated wire cutter may be used instead of a blade. In such an arrangement, the heated wire will be heated by electrical current and the wire displaced from the blade aperture to the blade recess in order to cut the film and therefore provide a label which is then retained and associated with the transfer head for delivery to typically a robotic pick-up device which in turn supplies the label to an in mould labelling apparatus for items such as food containers.

As indicated above, generally the cut label is retained upon the transfer head through a vacuum suction association. The transfer head includes apertures from a vacuum chamber is to the transfer head plate upon which initially the film is clamped and then subsequently the plate upon which the cut label is retained for presentation. Nevertheless, it will be appreciated that other forms of transient association or adhesion of the cut label to the transfer head may be utilised whilst that transfer head is manipulated to allow access by an extraction mechanism for delivery to an in mould labelling apparatus.

As illustrated in the attached drawings, generally the cutter cassette will match the transfer head. However, matching may also be achieved whereby the transfer head includes a matrix comprising rows of blade recesses whilst the cutter cassette matches one row of that transfer head at a time in order to cut labels and progressively moves sequentially across the width of the transfer head in order to cut labels at each row until the transfer head is full of cut labels for presentation to appropriate extraction and delivery mechanisms for in mould labelling apparatus. Alternatively, as indicated above the transfer head may incorporate a number of different blade recesses appropriate for particular cutter cassettes. In such circumstances, a cutter cassette would be located by appropriate control means below the correct matched blade recesses for the actual blade aperture/blade in use at that present time whilst the other blade recesses of the transfer head would not be used.

It will be appreciated that the actual cutting depth in terms of penetration of the blade into the blade recess of the transfer head will be determined by operational requirements. Similarly, the degree of adhesion to provide retension of the cut label upon the transfer head until presentation will depend upon operational requirements. For example, as indicated a film may be used which is solid or alternatively porous or perforated materials may be used to form the film from which the labels are cut. It will be appreciated that the necessary suction in such circumstances if used for retention of the label upon the transfer head will vary between different types of material.

The transfer head as indicated may utilise vacuum suction in order to retain the cut label upon the transfer head until presentation to appropriate transfer means to the in mould labelling apparatus. This suction may be reversed in order to provide a blowing action to facilitate removal of the label from the transfer head by the means of the transfer of the label to the in mould labelling apparatus. Such blowing action may also be utilised through a feed back control technique determination of removal of the label from the transfer head to allow a subsequent label cutting operation to be performed.

A label in accordance with the present invention will be cut by a process of steps including presenting a label pre-cursor film to a label cutter in accordance with the present invention, clamping that film between plates of the respective cutter cassette and transfer head, displacing the blade in the cutter cassette through the film and into a blade recess in the transfer head, initiating operation of retention means if not already operational in the transfer head in order to ensure retention of the cut label in association with that transfer head, retracting the blade into the blade aperture of the cutter cassette, releasing the abutment clamping between the plates of the respective cutter cassette and the transfer head and then manipulating that transfer head to allow extraction of the cut label or labels by appropriate means.

Various embodiments of the present invention will be readily understood by those skilled in the art. For example, although described with regard to flat plate abutment between the respective parts of the cutter cassette and transfer head, it will be understood that provided there is reciprocal shaping these plate surfaces may be curved in order to appropriately clamp the film prior to cutting of labels from that film. In such circumstances, labels which are to be used with regard to cylindrical or curved containers formed in the in mould apparatus may be appropriately cut in their eventual curved shape rather than in two dimensional flat configuration. In such circumstances, the curved labels may have a better appearance on the eventual product produced by the in mould forming technique. Cutting of curved labels with previous systems would not be possible.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A label cutter comprising two opposed plates respectively in a blade cassette and a transfer head, the blade cassette including a blade aperture for accommodating a blade whilst the transfer head includes a blade recess such that in use, the opposed plates are brought together into an abutment with a label film between them, the blade extends between the blade aperture and the blade recess in order to cut a label from the film and that label remains associated with the transfer head after cutting.

2. A cutter as claimed in claim 1 wherein there are more than one blade aperture and blade recess combination within the cutter.

3. A cutter as claimed in claim 2 wherein these combinations may be selectively operatable dependent upon presented label shape or size in the label film.

4. A cutter as claimed in any preceding claim wherein the head includes means to cause transient adherence to the transfer head by a label.

5. A cutter as claimed in any preceding claim wherein the head is displaceable to present a label to a moulding apparatus or pick-up means for such apparatus.

6. A cutter as claimed in any preceding claim wherein the blade has a reciprocal action across the blade aperture and blade recess and the blade is driven by a linear actuator.

7. A cutter as claimed in claim 2 and any claim dependent thereon wherein each cutting blade has its own linear actuator and separate control, if some of the labels do not need to be cut, the cutting blades not required then operation of those blades can be turned off.

8. A cutter as claimed in any preceding claim wherein at least one of the plates has a non-slip surface.

9. A cutter as claimed in any preceding claim wherein the blade recess incorporates means for sharpening the blade.

10. A cutter as claimed in any preceding claim wherein the blade comprises a heated electric wire arranged in use to cut the label film.

11. A label cutting machine comprising a label cutter as claimed in any preceding claim along with a label film supply mechanism comprising a supply reel for presentation of the film across the cutter and a waste reel for collection of excess film from which labels have been removed.

12. A machine as claimed in claim 11 wherein the machine cuts the label or labels by pulling a pre-printed film, which is stored on the reel, over the cutter cassette, the film is pulled through by drive rollers which pull off sufficient film for each cutting operation.

13. A machine as claimed in claim 11 or claim 12 wherein when sufficient film has been drawn off, the transfer head is moved by a linear actuator towards the cutter cassette, the printed film is then sandwiched between the transfer head and a non slip plate on the cutter cassette, at this point a vacuum is applied to the transfer head in the area where the label or labels are to be, the cutting blade or blades are now driven through the blade aperture, in the plate on the cutter cassette, through the printed film and into the blade recess in the transfer head.

14. A machine as claimed in any of claims 11 to 13 wherein when the label or labels have been cut, the transfer head actuator is then retracted retaining the cut label or labels, the transfer head can now be moved, either by a linear actuator, or a rotary actuator, to a presentation position for the label or labels to be collected up by an in mould label pick-up robot or placed directly in a moulding labelling machine.

15. A machine as claimed in any of claims 11 to 14 wherein when the film is drawn off for the next operation, the waste film left from the cut is wound onto the waste reel ready for disposal.

16. Any novel subject matter or combination including novel subject matter disclosed herein, whether or not within the scope of or relating to the same invention as any of the preceding claims.
